## Europäisches Patentamt
## European Patent Office
## Office européen des brevets

(11) Numéro de publication: **0 187 553**
**B1**

(12) # FASCICULE DE BREVET EUROPÉEN

(45) Date de publication du fascicule du brevet:
**25.01.89**

(51) Int. Cl.⁴: **B 01 D 29/46**, D 21 D 5/02

(21) Numéro de dépôt: **85402028.6**

(22) Date de dépôt: **21.10.85**

(54) **Perfectionnements aux tamis à fentes pour l'épuration de pâte à papier et aux épurateurs munis de ces tamis.**

(30) Priorité: **12.11.84 FR 8417189**

(43) Date de publication de la demande:
**16.07.86 Bulletin 86/29**

(45) Mention de la délivrance du brevet:
**25.01.89 Bulletin 89/4**

(84) Etats contractants désignés:
**AT BE CH DE FR GB IT LI NL SE**

(56) Documents cité:
**EP-A-0 049 789
GB-A-1 258 090
US-A-2 488 009
US-A-2 707 905
US-A-3 770 129**

(73) Titulaire: **E. + M. Lamort Société Anonyme dite:, rue de la Fontaine Ludot, F-51300 Vitry- le-François (FR)**

(72) Inventeur: **Lamort, Pierre, Butte dite du Donjon, F-51300 Vitry en Perthois (FR)**

(74) Mandataire: **Loyer, Bertrand, Cabinet Pierre Loyer 77, rue Boissière, F-75116 Paris (FR)**

LIBER, STOCKHOLM 1989

EP 0 187 553 B1

## Description

On sait que de nombreux épurateurs de pâte à papier comportent des tamis, généralement de forme cylindrique, réalisée en tôle d'acier inoxydable et dont les perforations sont soit des fentes, soit des trous.

La réalisation de fentes étroites (quelques dixièmes de millimètres), de section évasée, dans une tôle d'acier inoxydable de 5 à 6 mm d'épaisseur peut se faire par fraisage. Les tamis donnent satisfaction, mais leur prix de revient est très élevé.

On a donc cherché d'autres moyens, notamment par soudage ou assemblage de barrettes longitudinales sur des traverses en forme de cercles.

Cependant avec des tamis ainsi réalisés, on rencontre des difficultés à l'assemblage du tamis sur les couronnes d'extrémité qui viennent le centrer et le maintenir dans l'appareil. En effet, cet assemblage est généralement effectué par soudure des extrémités des barrettes sur les couronnes et l'on obseeve des ruptures de barrettes ou de soudures qui mettent rapidement l'appareil hors détat de fonctionner. Un exemple de réalisation de tels tamis est décrit au brevet US-A-4 155 841.

L'invention a pour but de résoudre ces inconvénients et elle se rapporte au mode de montage du tamis dans les couronnes d'extrémité.

L'invention a pour objet un tamis cylindrique pour épurateur réalisé au moyen de barrettes longitudinales assemblées côte à côte sur des traverses en forme de cercle, et comportant à chaque extrémité une couronne de montage, caractérisé en ce qu'il comporte à chaque extrémité une contre-couronne assemblée à la couronne par vissage en enserrant sans jeu une traverse terminale en forme de cercle, tout en laissant un jeu entre les barrettes et les couronne et contre-couronne.

L'invention est encore remarquable par le fait que le jeu est de l'ordre de 0,5 à 1 millimètre le long des parties longitudinales des barrettes en regard des couronne et contre-couronne.

L'invention a encore pour objet un épurateur comprenant un tamis cylindrique selon les définitions précédentes.

Cette disposition extrêmement simple a permis de façon surprenante d'éliminer les ruptures de barettes ou de soudures.

L'explication de ce résultat semble être que la longévité et la résistance à l'usage d'un tel tamis exigent que les barrettes conservent leur flexibilité et leur souplesse sur toute leur longueur et notamment aux points de fixation sur les couronnes.

En effet, dans les épurateurs de ce type, il est généralement prévu des rotors à ailettes ou "foils" qui se déplacent à proximité du tamis en vue d'assurer son nettoyage et débouchage permanent par création de dépressions et surpressions alternées. Du fait de la rotation de ce rotor, les barrettes subissent des efforts de flexion alternés ainsi que des efforts tangentiels importants qui sont transmis aux extrémités des barrettes et provoquent les ruptures de soudures ou de barrettes, lorsque celles-ci sont fixées par soudure sur une couronne d'extrémité.

Le montage objet de l'invention, du fait qu'il laisse aux extrémités des barrettes en libre jeu par rapport aux couronnes, conserve la flexibilité des barrettes sur toute leur longueur, tandis que le centrage et le maintien du tamis sont réalisés par l'intermédiaire des traverses d'extrémité en forme de cercles qui, elles ne sont pas soumises aux mêmes efforts ou aux mêmes déformations.

Toutefois, l'invention n'est pas limitée à cette explication qui n'a qu'une valeur d'hypothèse.

L'invention est illustrée par le dessin joint sur lequel:

La figure 1 est une vue en coupe axiale d'un épurateur muni des dispositions de l'invention;

La figure 2 est une vue de détail du montage des couronnes d'extrémité, en coupe axiale;

La figure 3 est une vue en coupe partielle selon A - A de la figure 2;

La figure 4 est une variante de la figure 2.

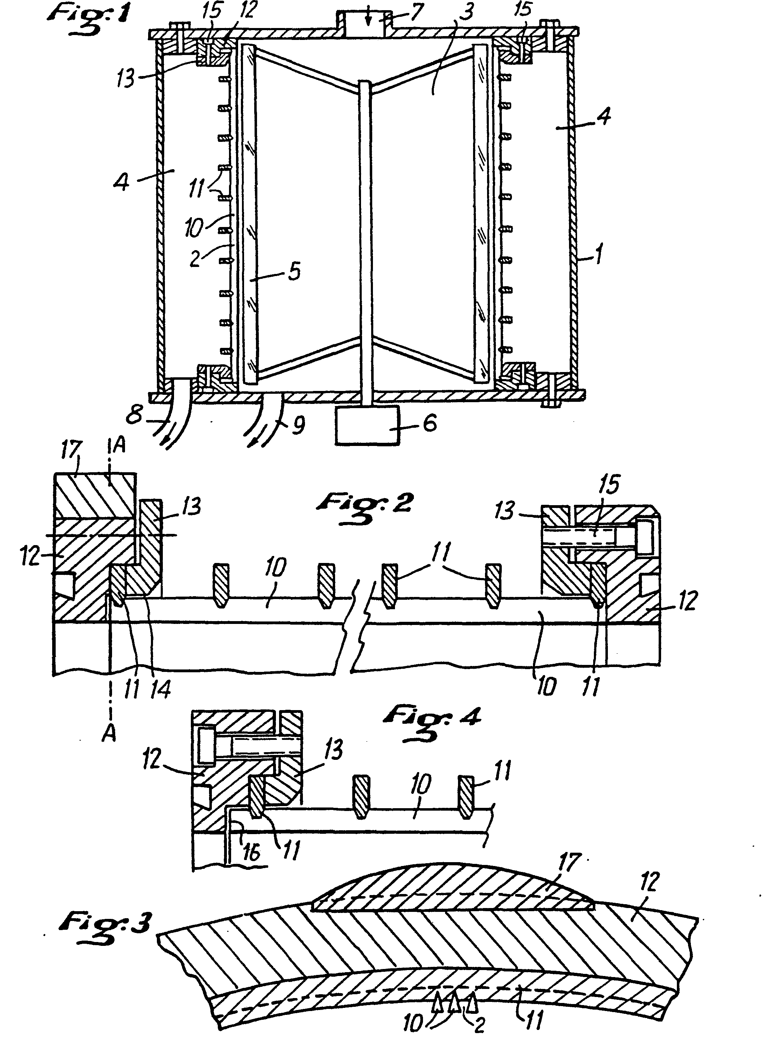

En se reportant à la figure 1, on voit qu'un épurateur à tamis du type auquel se rapporte l'invention comporte une enveloppe externe 1 contenant un tamis cylindrique 2 séparant des chambres 3 et 4 et un rotor à ailettes 5 entraîné par le moteur 6.

Dans l'exemple représenté, il s'agit d'un épurateur centrifuge comportant une entrée de pâte 7, une sortie de pâte acceptée 8 et un orifice de décharge des refus 9, mais, bien entendu, l'invention se rapporte aussi bien à un épurateur centripète.

Le tamis 2 est du type à barrettes longtudinales 10 assemblées au moyen de traverses 11 en forme de cercle, par exemple par soudage.

Conformément à l'invention (figures 2, 3, 4) le tamis 2 est monté à chaque extrémité au moyen d'une couronne 12 et d'une contre-couronne 13 enserrant une traverse 11 tout en laissant un jeu entre les barrettes 10 et les couronnes 12 et 13. Ce jeu doit être principalement prévu en 14 le long des faces ou arêtes longitudinales des barrettes 10 et sera de préférence de l'ordre de 0,5 à 1 millimètre. Ledit jeu peut être plus faible entre les faces terminales 16 des barrettes 10 et les couronnes 12.

L'assemblages des couronnes 12 et 13 entre-elles sera par exemple réalisé par vissage 15 ou boulonnage.

Comme représenté dans la variante de la figure 4, les traverses d'extrémité 11 ne sont pas nécessairement placées au droit des faces terminales 16 des barrettes, lesquelles peuvent déborder légèrement dès lors que le jeu prévu maintenu sur toute leur longuer.

L'invention s'applique non seulement au cas tamis réalisés par soudage de barrettes 10 sur des traverses 11 en forme de cercles, mais également lorsque l'assemblage est réalisé sans soudure comme prévu à la demande de brevet français n° 8 417 189 déposé le 12 novembre 1984 au nom de la demanderesse; en effet, le même problème se pose à l'assemblage des couronnes d'extrémité pour les tamis réalisés selon cette demande.

L'invention vise également les tamis à fentes montés dans leurs couronnes d'extrémité selon l'invention, ces tamis étant destinés à être eux-mêmes montés dans des épurantes, classeurs ou appareils analogues.

Dans les figures 2 et 3, on a représenté 17 des pattes fixées sur la couronne 12 et destinées au montage du tamis dans l'epurateur.

## Revendications

1. Tamis cylindrique pour épurateur réalisé au moyen de barrettes longitudinales (10) assemblées côte à côte sur des traverses (11) en forme de cercles, et comportant à chaque extrémité une couronne (12) de montage, caractérisé en ce qu'il comporte à chaque extrémité une contre-couronne (13) assemblée à la couronne (12) par vissage (15) en enserrant sans jeu une traverse terminale (11) en forme de cercle, tout en laissant un jeu entre les barrettes (10) et les couronne et contre-couronne (12 et 13).

2. Tamis cylindrique selon la revendication 1 caractérisé en ce que le jeu est de l'ordre de 0,5 à 1 millimètre le long des parties longitudinales des barrettes (10) en regard des couronne et contre-couronne (12 et 13).

3. Epurateur comprenant un tamis cylindrique selon l'une des revendications précédentes 1 et 2.

## Patentansprüche

1. Zylindrisches Sieb für Reiniger mit Längsstäben (10), die nebeneinander auf ringförmigen Querträgern (11) angebracht werden und an beiden Enden mit einem Befestigungskranz (12) versehen sind, dadurch gekennzeichnet, daß an beiden Enden auf den Kranz (12) ein Gegenkranz (13) aufgeschraubt (15) wird, der den ringförmigen Endquerträger (11) formschlüssig festspannt, jedoch zwischen den Stäben (10) und Kranz und Gegenkranz (12 und 13) ein Spiel läßt.

2. Zylindriches Sieb nach Anspruch 1, dadurch gekennzeichnet, daß dieses Spiel in Längsrichtung der Stäbe (10) gegenüber Kranz und Gegenkranz (12 und 13) verläuft und 0,5 - 1 mm beträgt.

3. Reiniger mit zylindrischen Sieb nach Anspruch 1 oder 2.

## Claims

1. A cylindrical strainer for a scrubber formed by means of longitudinal bars (10) assembled side by side on circle-shaped cross-pieces (11), and including at each end a mounting flange(12), characterized in that it includes at each end a counter-crown (13) assembled with flange (12) by screwing (15) encompassing without any clearance an end circle-shaped cross-piece (11) but leaving a clearance between the bars (10) and the flange and counter-flange (12 and 13).

2. A cylindrical strainer according to claim 1, characterized in that the clearance is of the order of 5 to 1 millimeter along the longitudinal portions of the bars (10) facing the flange and counter-flange (12 and 13).

3. Ascrubber comprising a cylindrical strainer according to one of the preceding claims 1 and 2.

EP 0 187 553 B1

Fig:1

Fig:2

Fig:4

Fig:3